# EUROPEAN PATENT SPECIFICATION

(11) **EP 4 499 797 B1**
(45) Date of publication and mention of the grant of the patent: **18.03.2026**
(21) Application number: 23714568.5
(22) Date of filing: 28.03.2023
(51) Int. Cl.: C12C 1/067, C12C 5/02

(54) **METHOD FOR PRODUCING FLAVORED MALTED CEREALS**
VERFAHREN ZUR HERSTELLUNG VON AROMATISIERTEM GEMÄLTZEM GETREIDE
PROCÉDÉ DE PRODUCTION DE CÉRÉALES MALTÉES AROMATISÉES

(30) Priority: 28.03.2022 EP 22164867
(43) Date of publication of application: 05.02.2025
(73) Proprietor: Boortmalt, 2030 Antwerp (BE)
(72) Inventor: PECK, Cristal, 2000 Antwerp (BE); BOLAT, Irina, 2180 Ekeren (BE); DUMONT, Koenraad, 9840 De Pinte (BE)
(74) Representative: Gevers Patents
(86) International application number: PCT/EP2023/058050
(87) International publication number: WO 2023/186930

(56) References cited:
- CN-A- 106 701 379
- CZ-U1- 33 670
- KR-B1- 102 056 473
- US-A1- 2005 058 745
- US-A1- 2006 018 995
- US-A1- 2013 084 359

## Description

### FIELD OF THE INVENTION

The present invention relates to a method for producing flavored malted cereals, to flavored malted cereals obtained by such method and their use for the production of a beverage product or a food product, and to the use of separation techniques for separating solid infusible materials from a mixture further containing dried flavored malted cereals.

### BACKGROUND OF THE INVENTION

Malted cereals, such as malted barley, are used as raw materials in a variety of applications, such as in the production of fermented beverages (*e.g*. alcoholic or non-alcoholic beer or distilled alcoholic beverages), as well as in food products. Advantageously, malt extracts have been found to support the growth of beneficial probiotic cultures in the gut, regulate cholesterol levels and enhance nutrient absorption (Growth studies of potentially probiotic lactic acid bacteria in cereal-based substrates, D. Charalampopoulos et al. DOI: 10.1046/j.1365-2672.2002.01592.x).

In the field of fermented beverages, the rapid development of beers and craft brewing has been characterized by a particular interest in the development and production of new fermented beverages having unique organoleptic properties, including taste, smell, color or foaming properties.

Although the primary use of malt is directed to beverage production, there is also an interest in other food industries, and notably in the bakery industry. Indeed, the malting process of cereals allows the cereals to produce enzymes which allows starches to be converted into sugars, as well as other valuable enzymes. Said malted cereals are consequently of interest as raw materials for baking goods, flavoring and /or as coloring agent in the food industry.

Efforts have been made towards the development of new types of beverages. Notably, US 2006/0018995 A1 describes a process of producing a beverage infused with a liquid-infusible substance with the aim that such beverage has the soothing medicinal effects of the infused substance. In particular, in this process, tea or other liquid-infusible substances such as marijuana or tobacco can be added before, after or during any of the major process steps (*e.g*. malting, germinating, kilning etc.). It is clear from the reading of this patent application that, to obtain a beverage infused with a liquid-infusible substance, it is essential that the latter remains throughout the process to allow to infuse into the beverage and consequently to obtain the medicinal effect of said liquid-infusible substance.

It is also known in the art to provide a flavored malt composition. Notably, CZ29273U1 describes a flavored malt composition and a method of preparation thereof with the aim to provide a flavored malt composition having an attractive taste, and could be consumed directly after flavoring. To this end, a malted grain of barley contains added flavorings and/or aromatic substances. In particular, in the process, the flavored malt composition is obtained by the preparation of finished malt (*via* soaking/steeping, germination and heating), followed by the addition of flavoring agents, spices and/or synthetic flavorings. It is clear that the flavoring is brought from the added substances. However, a drawback of this solution is that the presence of added substances is undesirable when the malted cereals are used as raw materials, in, for example, a process of producing a beverage or a food product. Indeed, such presence would require said process to be substantially modified.

In view of the above, there is thus a need to provide a process for producing flavored malted cereals, having desired organoleptic properties, and in particular a unique and inherent flavor, which malted cereal is easy to process in a further process for producing a beverage or a food product.

### SUMMARY OF THE INVENTION

The inventors have now surprisingly found that it is possible to provide a method of producing malted cereals fulfilling the above mentioned needs and overcoming the above mentioned disadvantages.

According to an aspect of the present invention, there is provided a method for producing dried flavored malted cereals, comprising the following steps:
a. providing cereals;
b. adding at least one solid infusible material, wherein said at least one solid infusible material is selected from the group consisting of aromatic herbs, spices, flowers, fruits and seeds, and combinations thereof, for flavoring said cereals during a malting process of said cereals, wherein said malting process of cereals comprises
   i. at least one steeping step,
   ii. at least one germination step, and
   iii. at least one drying step
c. obtaining dried flavored malted cereals;
d. separating said at least one solid infusible material from the dried flavored malted cereals by means of at least one separation technique, selected from the following: gravity separation, optical separation, and separation by size.

It is an advantage of the method according to the invention that dried flavored malted cereals can be provided, wherein the cereals have desired organoleptic properties. For one thing, it has been found that the organoleptic properties of the cereals can be adjusted by altering the process parameters. In addition, it has surprisingly been found that separating said at least one solid infusible material from a mixture comprising said material and said dried flavored malted cereals, provides for dried flavored malted cereals having modified organoleptic properties in comparison with properties obtained from a mixture containing the at least one solid infusible material. As a consequence, a broader organoleptic spectrum or organoleptic range is at disposition of the user, e.g. a brewer.

It is a further advantage of the method according to the invention that substantially pure dried flavored malted cereals can be obtained, which have been found to have an improved workability or ease of use when used in a further process for producing a food product. Indeed, a malt still containing solid infusible material may be more difficult to handle in a step of a process for producing a food product, e.g. in a filter step, or may alter the color or turbidity of the food product.

It is a further advantage of the method according to the present invention that a beverage brewed from the dried flavored malted cereals obtained by the process according to the present invention has a longer shelf-life. Indeed, it has been found that said beverage shows low turbidity, which improves its colloidal stability. The turbidity of a beverage provides the consumers with a certain impression. In the particular case of beer, consumers expect a filtered beer to be a clear, bright and non-hazy beverage. Furthermore, a low turbidity beer provides a longer shelf-life. The formation of non-biological hazes due to interactions between the beverage components can thus be significantly decreased.

In another aspect according to the present invention, there is provided the use of a separation technique for separating at least one solid infusible material from a mixture further containing dried flavored malted cereals.

In another aspect according to the present invention, there is provided dried flavored malted cereals obtained by said method.

In another aspect according to the present invention, there is provided the use of said dried flavored malted cereals obtained by said method, for the production of a beverage product or a food product.

### DETAILED DESCRIPTION OF THE INVENTION

An aspect of the invention relates to a process or method for producing dried flavored malted cereals. Said flavored malted cereals can be used subsequently as a raw material for producing beverages, typically fermented beverages, or for use in food applications in particular for bakery, pastry or confectionary products. The process comprises the steps of providing a cereal or cereals, adding at least one solid infusible material to said cereal or cereals during a malting process of said cereal or cereals, obtaining dried flavored malted cereals by allowing the solid material to infuse the cereals during the malting process, and separating the solid material from the malted cereals in a separation process using a technique, which is based on at least one of gravity separation, optical separation, and separation by size. The cereals and the at least one solid infusible material are thereby separated at the end of the malting process or after the last step of the malting process.

Within the context of the present invention, the term "cereals", as used herein, may have the broadest meaning general known in the art. As such, the term "cereals" refers to grasses producing grains.

Non-limiting examples of cereals include barley, wheat, rye, corn, millet, oats, rice, sorghum, and mixtures thereof.

In preferred embodiments according to the invention, the cereals are selected from the group of barley, wheat, rye, oats and rice. More preferably, the cereals are barley.

The terms "cereal" and "cereals" are used herein interchangeably, and may refer to a single variety of cereals as well as a mixture thereof.

Within the context of the present invention, the term "solid infusible material" is intended to denote a material which, during the malting process, releases certain soluble substances, in particular flavor and/or aroma molecules. In other words, the infusible material infuses or has the ability to infuse specific components into a medium, the medium referring to the environment wherein the malting process takes place. The medium is typically an aqueous medium.

Within the context of the present invention, the term "solid" is intended to denote that the infusible material is substantially insoluble in an aqueous liquid, and in particular in water. Nevertheless, it is understood that it will usually be possible to extract certain water-soluble flavor and/or aroma molecules from said solid infusible material.

Without being bound to this theory, it is inferred that the water-soluble flavor and/or aroma molecules, which are infused into the medium are absorbed by the cereals during the malting process according to the present invention. In other words, the endosperm and/or the embryo of the dried flavored malted cereals may contain said flavor and/or aroma molecules. It is further inferred that the process according to the present invention allows said flavor and/or aroma molecules to undergo biotransformation within the cereals.

Within the context of the present invention, the term "biotransformation" is intended to refer to the degradation process of the flavor and/or aroma molecules caused by the biological activity of the cereals during its development. In other words, said flavor and/or aroma molecules degrade and thus leads to new flavor and aroma, which further enlarges the aromatic spectrum of the resulting dried flavored malted cereals.

Non-limiting examples of flavor and/or aroma molecules mentioned may be made of geraniol, linalool, 1-alpha-terpineol, cinnamaldehyde and (E)-anethole.

Within the context of the present invention, the expression "at least one solid infusible material" is intended to denote one infusible material or more than one infusible material. Mixtures of infusible materials may be used. In particular, mixtures of infusible materials mentioned herein may be used.

In the rest of the text, the expression "solid infusible material" is understood, for the purposes of the present invention, both in the plural and in the singular form.

In embodiments, the solid infusible material is a solid infusible material suitable for human consumption.

Solid infusible materials according to the present invention are aromatic herbs, spices, flowers, fruits and seeds, and combinations thereof.

Within the context of the present invention, the term "aromatic herbs" is intended to denote any herb plant materials suitable for human consumption.

Non-limiting examples of aromatic herb notably include basil, bay leaves, chervil, chive, cilantro, coriander, dill, fenugreek, lemongrass, marjoram, mint, parsley, peppermint, rosemary, sage, spearmint, lemon myrtle, strawberry gum, Gertaldton wax, and thyme, and mixture thereof. Preferably, the aromatic herb is chosen from the group consisting of basil, coriander, marjoram, parsley, sage, thyme, and mixture thereof.

More preferably, the aromatic herb is chosen from the group consisting of rosemary, sage and thyme, and mixture thereof.

Within the context of the present invention, the term "spices" is intended to denote any spices suitable for human consumption.

Non-limiting examples of spices notably include anise, aniseed, cardamom, cinnamon, clove, coriander, cumin, garlic, ginger, nutmeg, salt, black pepper, white pepper, pink pepper, star anise, saffron, turmeric, allspice, mate, curcuma and mixture thereof.

Preferably, the spices is chosen from the group selected from cardamom, cinnamon, clove, coriander, cumin, garlic, ginger, nutmeg, pepper, star anise, saffron, turmeric and mixture thereof.

More preferably, the spices is chosen from the group selected from cinnamon, ginger, and star anise, and mixtures thereof.

Within the context of the present invention, the term "fruit" is intended to denote any fruits suitable for human consumption. The fruit may be the fruit in its entirety, or any part of the fruit, such as for example, the flesh (i.e. the pulp) or the peel of said fruit. It is understood that the term "peel" is intended to encompass the terms "rind" and "skin" and refers to the outer protective layer of a fruit, in particular the part of the fruit known in botanical terms as the exocarp.

Non-limiting examples of fruit notably include citrus fruits (such as orange, lemon, lime, clementine, mandarin, tangerine, bergamot, grapefruit, kumquat, pomelo), aronia berries (chokeberries), banana, bilberry, boysenberry, blackberry, blueberry, cherry, cloudberry, chili pepper, acai berry, cranberry, elderberry, gooseberry, goji berry, huckleberry, juniper, lingonberry, loganberry, mulberry, olallieberry, pine berries, salmon berry, sumac berries, barberries, pomegranate, raspberry (red, black, golden, or white raspberry), physalis (Cape Gooseberry), serviceberry (Juneberry) red currant, black currant, strawberry, apricot, dragonfruit, fig, guava, kiwi, nashi, lychee, mango, mangosteen, papaya, passion fruit, pineapple, apple, grape, melon, peach, pear, plum, prickly pear fruit, pumpkin, watermelon, coconut, almond, macadamia, pistachio, pecan, pink peppercorn and mixture thereof.

Preferably, the fruit is selected from the group consisting of citrus fruits (such as orange, lemon, lime, clementine, mandarin, tangerine, bergamot, grapefruit, kumquat), chili pepper, juniper, coconut and mixture thereof.

More preferably, the fruit is a citrus fruit, and/or a coconut. More preferably, the fruit is selected from the group consisting of orange, lemon, mandarin, clementine, mandarin, coconut and mixture thereof.

Even more preferably, the fruit is selected from the group consisting of orange peel, lemon peel, mandarin peel, and clementine peel, coconut, and mixture thereof.

Within the context of the present invention, the term "flower" is intended to denote any flowers suitable for human consumption. The flower may be the flower in its entirety, or any part of the flower, such as for example, the petals, the pistil, or the stigma.

Non-limiting examples of flower notably include elderflower, lavender, hibiscus, rose, cherry blossom, orange blossom, apple blossom, pear blossom, lime blossom, grapefruit blossom, mandarin blossom, rosemary blossom, mallow blossom, jasmine, marigold, dandelion, lemon verbena, safflower, cornflower, poppy, cactus flowers, chamomile and mixture thereof.

Preferably, the flower is selected from lavender, hibiscus, rose, and mixture thereof. More preferably, the flower is selected from the group consisting of whole lavender flower, hibiscus petal, rose petal, and mixture thereof.

Within the context of the present invention, the term "seed" is intended to denote any seed suitable for human consumption. It is understood that the term "seed" also includes beans.

Non-limiting examples of seed notably include coffee beans, cocoa nib, grains of paradise, pumpkin seed, vanilla bean, tonka bean, caraway seeds, sesame seed, and poppy seed.

According to one embodiment of the method of the present invention, the solid infusible material is chosen from the group consisting of aromatic herbs, spices, fruits, flowers and seed.

According to certain embodiments of the method of the present invention, at least one further solid infusible material, chosen from the group consisting of spruce tips, Aloe Vera, angelica root, beetroot, bee pollen, carrot, chicory (root), chilies, cookie, such as gingerbread cookie, speculoos cookie and speculaas cookie, honey, Turkish delight, and wood, such as liquor barrel wood having contained bourbon, whiskey, gin, beer, rum, or wine may be further added during the malting process of cereals, as detailed above.

According to certain embodiments of the method of the present invention, said solid infusible material may be chosen from the group consisting of spruce tips; pine buds; Aloe Vera; angelica root; beetroot; bee pollen; carrot; chicory (root); chilies; cookie, such as gingerbread cookie, speculoos cookie and speculaas cookie; honey; Turkish delight; and wood, such as liquor barrel wood having contained bourbon, whiskey, gin, beer, rum, or wine; alone or in combination with other solid infusible materials.

The solid infusible material may be in any form known to the skilled in the art, that is to say, fresh, dried, or frozen.

Preferably, when the solid infusible material is added before or during the steeping step of the malting process of cereals, as detailed above, the solid infusible material is preferably added as dried solid infusible material. The inventors have found that using dried solid infusible materials before or during the steeping step of the malting process of cereals, avoids the rotting of the solid infusible material, thereby limiting any bacterial contamination.

It is understood that the amount of the infusible material which is added during the malting process of cereals, as detailed above will depend on the type of solid infusible material, its potency to release flavor and/or aroma molecules, and on which step of the malting process of cereals the solid infusible material is added.

As a general rule, the solid infusible material, as detailed above, is added during the malting process of cereals, as detailed above, in a weight ratio solid infusible material:cereals of at least 0.01:1 or at least 0.02:1 or at least 0.05:1 or at least 0.1:1

It is further understood that the upper limit of the weight ratio solid infusible material:cereals is desirably of at most 1:1 or 0.9:1 or 0.8:1 or 0.7:1.

In a preferred embodiment of the method of the present invention, the solid infusible material is added during the malting process of cereals, as detailed above, in a weight ratio solid infusible material: cereals of between 0.01:1 and 1:1, or of between 0.02:1 and 0.9:1, or of between 0.05:1 and 0.8:1, or of between 0.1:1 and 0.7:1.

According to certain embodiments of the method of the present invention, at least one extract of the solid infusible material, as detailed above, is further added during the malting process of cereals, as detailed above.

The extract of the solid insoluble material is particularly suited for large scale production of dried flavored malted cereals and allows to reduce the cost of certain solid insoluble material.

With the context of the present invention, the expression "at least one extract of the solid infusible substance", is intended to denote one extract of the solid infusible material or more than one extract of the solid infusible material. Mixtures of extracts of solid infusible materials may be used.

In the rest of the text, the expression "extract of solid infusible material" is understood, for the purposes of the present invention, both in the plural and in the singular form.

Non-limiting examples of extracts mentioned may be made of tinctures, fluid extracts, solid extracts, tar and infused oils. It will be understood that fluid extracts will not be removed in the separating step of the method as described herein.

Non-limiting examples of extract of solid infusible materials mentioned may be made of extracts of citrus fruits.

Preferably, the extract is chosen from the group consisting of extracts of orange.

Within the context of the present invention, the expression "separating the at least one solid infusible material" relates to removing said at least one solid infusible material from a mixture comprising said material and a dried flavored malted cereal. It will be understood that the at least one solid infusible material is considered separated or removed from said mixture if less than 10.0 wt.%, preferably less than 5.0 wt.%, more preferably less than 4.0 wt.%, even more preferably less than 3.0 wt.%, preferably less than 2.0 wt.%, more preferably less than 1.0 wt.% of the material is still present in the mixture, with regard to the original amount of solid infusible material in said mixture.

Said dried flavored malted cereals, which is obtained at the end of the method according to the invention, i.e. at the end of step d., may be considered to be substantially pure or substantially free of other components, including said at least one infusible material, if said other components are below a certain threshold as described here below. In embodiments according to the invention, said dried flavored malted cereals obtained at the end of the method according to the invention contain less than 10.0 wt.%, preferably less than 5.0 wt.%, more preferably less than 4.0 wt.%, even more preferably less than 3.0 wt.%, more preferably less than 2.0 wt.%, and most preferably less than 1.0 wt.% of any other component, wherein said any other component includes said at least one solid infusible material.

Within the context of the invention, said dried flavored malted cereal has a degree of humidity of less than 10.0 wt.%, or less than 8.0 wt.% or less than 6.0 wt.%, or less than 4.0 wt.%.

According to certain embodiments of the method of the present invention, at least one liquid sweetener is further added during the malting process of cereals, as detailed above.

With the context of the present invention, the expression "at least one liquid sweetener", is intended to denote one liquid sweetener or more than one liquid sweetener. Mixtures of liquid sweeteners may be used.

In the rest of the text, the expression "liquid sweetener" is understood, for the purposes of the present invention, both in the plural and in the singular form.

Non-limiting examples of liquid sweeteners mentioned may be made of honey, maple syrup, birch syrup, beech syrup, nectar, corn syrup, malt syrup, sorghum syrup, refiner syrup, molasses, or other grain/nut syrups consisting of rice syrup, agave syrup, and palm syrup.

Preferably, the liquid sweetener is honey and/or maple syrup.

In a first step of the method according to the present invention, cereals are provided.

It will be clear to the skilled in the art that the cereals may be of or may arrive in various conditions, shape or size. The cereals can still be dirty or may have been stored for period of time prior to steeping. Likewise, the cereals may have absorbed moisture at different rates, because of the different size of the cereal grains.

In embodiments according to the invention, the process includes a step of pretreating the cereals provided, e.g. by cleaning, de-awning, washing, sorting by size (calibrating) or by quality, or any combination thereof. Such a step precedes the steps of initiating the malting process of the cereals and adding said at least one solid infusible material. As such, before admitting the cereals to the malting process, the cereals can be subjected to a pre-treatment step. Said pre-treatment step may include notably, but is not limited to, cleaning, de-awning, washing, sorting by size (calibrating) or by quality, or any combination thereof.

Such pre-treatment step may improve the quality and the uniformity of the final dried flavored malted cereals. It may also improve the efficiency of further processing steps.

In a subsequent step of the method according to the present invention, at least one solid infusible material for the purpose of flavoring the cereals, is added to or mixed with said cereal during a malting process of the cereals. The malting process of cereals comprises at least one steeping step, at least one germination step and at least one drying step, resulting in the production of dried flavored malted cereals.

Within the context of the present invention, the term "steeping" is intended to refer to the immersion of the cereals in water. During the steeping, the cereals are notably absorbing water, thereby increasing their moisture content, until the cereals have reached a sufficient moisture level to allow a uniform breakdown of the starches and the proteins. It is further understood that the steeping may already initiate the germination of the cereals.

The steeping of the cereals according to the present invention can be carried out by any method known to the skilled person according to general practice, such as notably using optimal temperature and time, and water content. For steeping the cereals, several methods may adequately be used.

The conventional steeping of cereals (e.g. barley) is well known in the art. Aspects of steeping are described, for example, in D. E. Briggs, Malts and Malting, Springer (1998); D. E. Briggs, J . S. Hough, R. Stevens, and T.W. Young, Malting and Brewing Science, Volume 1, Malt and Sweet Wort, Springer Verlag (1981); A. W. MacGregor and R. S. Bhatty, eds., Barley: Chemistry and Technology, American Association of Cereal Chemists (1996).

In general, a steeping step may include one or more wetting stages over a time and temperature effective for providing steeped cereals having a moisture content of between 20.0 wt.% to 60.0 wt.%, or 30.0 wt.% to 55.0 wt.%, or 40.0 wt.% to 50.0 wt.%. When the steeping step includes at least 2 wetting stages, a dry steeping stage, in which water is drained and air is drawn, may be performed between two wetting stages.

Desirably, the steeping of the cereals according to the present invention is performed during a period of between 8 to 72 hours, or of between 12 to 60 hours, or of between 20 to 50 hours.

Desirably, the steeping of the cereals according to the present invention is performed at a temperature of between 5 °C and 28 °C, or of between 11 °C and 20 °C, or of between 12 °C and 18 °C.

According to one embodiment of the method of the present invention, the at least one solid infusible material, is added one or more times before or during the steeping step of the malting process of cereals. Preferably, the solid infusible material is added one time before the steeping step of the malting process of cereals.

Within the context of the present invention, the term "germination" is intended to denote the step in which the cereals undergo a controlled growth and modification of its kernels by cell wall degradation in the starchy endosperm, the creation of soluble protein and free amino nitrogen and the synthesis of enzymes. The starchy interior portion of the steeped cereals kernels (also known as the endosperm mass) is made more friable and modified by cell wall degradation, with the aim to facilitate the growth of the embryo. During the germination, the embryo swells and emergence of rootlets are observed (chitting). The acrospires (also known as first leaf) also starts to grow from the embryo of the cereal kernels.

The germination of the cereals according to the present invention can be carried out by any method known to the skilled person according to general practice, such as notably using optimal temperature and time, and water content. For germinating the cereals, several methods may adequately be used.

The germination of the cereal according to the present invention can be carried out by any method known to the skilled in the art according to general practice, such as notably using optimal temperature, time, and moisture, and air flow. For germinating the cereals, several methods may adequately be used. The germination stage of the malting process is well known in the art. Certain aspects of germination are described, for example, in D. E. Briggs, Malts and Malting, Springer (1998); D. E. Briggs, J. S. Hough, R. Stevens, and T. W. Young, Malting and Brewing Science, Volume 1, Malt and Sweet Wort, Springer Verlag (1981); A.W. MacGregor and R. S. Bhatty, eds., Barley: Chemistry and Technology, American Association of Cereal Chemists (1996).

By a way of example, the cereals to be germinated are in general transferred in germination compartments comprising screen slotted false bottom. The cereals to be germinated receive in general a continuous humidified, temperature controlled, and oxygen content controlled airflow. The excess moisture is consequently drained through the screen slotted false bottom.

The germination compartments are in general equipped with large air handling fans that are in general used to transfer fresh air and/or recirculation air.

Furthermore the germination compartments are in general equipped with means for turning the germinated cereals, such as for example turning machines, to minimize temperature differences between the top and bottom of the germination bed.

Desirably, the germination step of the cereals according to the present invention is performed during a period between 48 hours and 144 hours, or of between 60 and 132 hours, or of between 72 hours and 120 hours.

Desirably, the germination step of the cereals according to the present invention is performed at a temperature of between 10°C and 28 °C, or of between 12 °C and 25 °C, or of between 15 °C and 20°C.

According to one embodiment of the method of the present invention, the at least one solid infusible material is added one or more times before or during the germination step of the malting process of cereals. Preferably, the solid infusible material is added one time before the germination step of the malting process of cereals.

Within the context of the present invention, the term "drying" is intended to denote the step during which the germinated cereals' moisture content is decreasing and during which the cereals stop growing.

The drying of the cereal according to the present invention can be carried out by any method known to the skilled in the art, such as for example by kilning, wind drying, smoke drying, or by roasting.

The drying of the cereals according to the present invention can be carried out by any method known to the skilled person according to general practice, such as notably using optimal temperature and time, and air flow. For drying the cereals, several methods may adequately be used.

According to a preferred embodiment of the method of the present invention, the step of drying is a step of kilning.

The kilning stage is well known in the art. Certain aspects of kilning are described, for example, in D. E. Briggs, Malts and Malting, Springer (1998); D. E. Briggs, J . S. Hough, R. Stevens, and T. W. Young, Malting and Brewing Science, Volume 1, Malt and Sweet Wort, Springer Verlag (1981); A. W. MacGregor and R. S. Bhatty, eds., Barley: Chemistry and Technology, American Association of Cereal Chemists (1996).

Preferably, the step of drying the cereals during the process of malting cereals according to the present invention is a step of kilning.

By a way of example, during a kilning process, the germinated cereals are in general heated in a kiln. In general, the kilning is carried out in three phases: wither, pre-cure (also called post wither), and cure.

The wither phase is in general the phase during which the germinated cereals are subjected to moderate temperature, of for example 60°C and high-volume air flow. During the wither phase, germination continues during the initial period when the cereals still contains a high level of moisture, but growth and modification slows and stops once the rootlets are "withered", with removal of all surface moisture as well as the more easily removed moisture in the embryo area of the cereals kernels.

The pre-cure phase is in general the phase during which the temperature is increased and airflow is decreased, thereby decreasing the moisture level of the cereals kernels.

The cure phase is in general the phase during which the temperature is increased so as to obtain the desired malt properties. The cure phase in general defines the product color and flavor development of the malt, as well as driving off undesirable volatiles, and reducing final product content to a microbiologically food safe level.

In general, the kilning step can be performed so as to provide malted cereals having a degree of humidity of less than 10.0 wt.%, or less than 8.0 wt.% or less than 6.0 wt.%, or less than 4.0 wt.%.

According to one embodiment of the present invention, the solid infusible material is added one or more times before or during the kilning step of the malting process of cereals. Preferably, the solid infusible material is added one time before the kilning step of the malting process of cereals.

It is understood that within the context of the present invention, any embodiment may be realized independently or in combination. In other words, the solid infusible material may be added before or during the steeping step, and/or before or during the germination step, and/or before or during the kilning step.

According to certain embodiments of the method of the present invention, the solid infusible material is added before the steeping step and before the kilning step of the malting process of cereals.

According to certain embodiments of the method of the present invention, the step of kilning of the malting process of cereals, as detailed above, can be followed by a step of roasting.

Within the context of the present invention, the term "roasting" is intended to denote a step of kilning, as detailed above, in which the temperature is substantially higher than the temperature of the kilning step. In general, the step of roasting aims at caramelizing the germinated and/or kilned cereals to modify its color and organoleptic panel.

In a subsequent step of the method according to the present invention, the at least one solid infusible material is separated from the dried flavored malted cereals by means of a separation technique. In embodiments according to the invention, said separation technique is selected from the following: gravity separation (also known as air separation), optical separation and separation by size, and combinations thereof.

The inventors have surprisingly found that when the at least one solid infusible material, as detailed above, is separated according to the method of the present invention, the resulting dried flavored malted cereals show excellent organoleptic properties, and in particular a unique flavor profile, said flavor being inherent of the dried flavored malted cereals while rendering any subsequent step of using the malted cereals, such as a process for making a beverage from the dried flavored malted cereals, or a process for making food products, substantially easier.

Furthermore, the inventors have surprisingly found that the colloidal stability of beverages manufactured from the dried flavoured malted cereals obtained by the method according to the present invention may be more optimal in comparison with a beverage manufactured from a mixture of said dried cereals and said solid infusible material. Due to an improved colloidal stability, the shelf-life of the former is significantly increased. Within the context of the present invention the "colloidal stability" is intended to refer herein to the ability of particles in the beverage to remain suspended without aggregating or agglomerating. Hence, no non-biological hazes are formed due to interactions between the beverage components.

In embodiments of the method according to the present invention, the at least one solid infusible material, as detailed above, is separated from the dried flavored malted cereals by size, more in particular by exploiting the differences in size of the different components. Preferably, said components are separated mechanically.

In preferred embodiments of the method according to the present invention, the at least one solid infusible material is separated from the dried flavored malted cereals by sieving. A separation by sieving may take place in a device of the separator type.

An example of such a separator device for a small scale application may be MLN Sample Cleaner by Pfeuffer GmbH, which further to a set of three sieves is also provided with an aspiration chamber for extracting lightweight dirt by aspiration.

Advantageously, mechanical sieving may be carried out with one or more than one sieve having different meshes or sieve openings of different size and shapes.

The sieves may be arranged in different ways, such as for example vertically, horizontally, or aligned successively along a steep slope, or arranged according to a combination of both arrangements.

Usually, the sieve having the largest mesh size will be positioned upstream, with sieves being typically positioned in descending mesh size order from top to bottom. Sieves having the lowest mesh size are thus usually positioned downstream. Alternatively, the sieves can be positioned in a random mesh size order from top to bottom.

The separator device or mechanical sieving device typically comprises a set of sieves. The separator device may contain 2, 3, 4, 5, 6 or 7 sieves. Preferably, the separator device may contain two or three sieves. More preferably, the separator device will contain three sieves. Alternatively, one sieve is used by the separator device.

In embodiments according to the present invention, the sieves may be a screen made from a perforated sheet material, or a woven mesh.

In embodiments according to the present invention, the sieve openings may be round or elongated.

It will be appreciated by the skilled person that the size openings of a sieve depend on the position of said sieve in the stream.

In embodiments according to the invention, the sieve openings or mesh size of a first positioned sieve may have a maximal length of at most 10.0 mm, preferably at most 9.0 mm, more preferably at most 8.0 mm, even more preferably at most 7.0 mm.

Furthermore, it is understood that the sieve openings or mesh size of a sieve situated in a last position or in a lower position may have a maximal length of at least 500.0 µm, preferably at least 1.0 mm, more preferably at least 1.5 mm, and most preferably at least 2.0 mm.

The term "maximal length" refers herein to the maximal distance that a sieve opening can have, such as the diameter in a round sieve opening or the diagonal in a rectangular sieve opening.

Alternatively, a single sieve could be used instead of a set of sieves.

In the case where a single sieve is used, the mesh size of this sieve may have a maximal length of at least 500.0 µm, preferably at least 1.0 mm, more preferably at least 1.5 mm, and most preferably at least 2.0 mm.

The at least one infusible material is thus separated from the dried malted cereals producing thereby at least two fractions, wherein each fraction of said at least two fractions may be collected between the sieve in the lower position and the sieve in the upper position, if said sieve in the upper position is present. Alternatively, each fraction of said at least two fractions may be collected on the sieve in the lower position, or each fraction of said at least two fractions may be the fraction passing though the sieve in the upper position or in the lower position.

At least one fraction consists essentially of or consists of substantially pure dried flavored malted cereals, as described herein.

Said fraction consisting essentially of the dried flavored malted cereals may be collected between the largest mesh size sieve and the lowest mesh sieve or may be the fraction that has passed through the set of sieves, specifically the sieve in the lower position, provided at least 2 mesh size sieves are used.

Said fraction consisting essentially of the dried flavored malted cereals may be collected on the sieve, provided one sieve is used, or may be the fraction that has passed through the sieve.

In embodiments of the method according to the present invention, the at least one solid infusible material, as detailed above, is separated from the dried flavored malted cereals by use of gravity separation.

Any gravity separation techniques and apparatus for the separation of the at least one solid infusible material from the dried flavored malted cereals, known to those skilled in the art may be used.

In one particular example, the at least one solid infusible material and the dried flavored malted cereals may be separated by gravity separation by feeding the mixture resulting from the malting process of cereals, as detailed above, to an end of a tilted oscillating table. Said titled oscillating table may be rotating around a central axis. The mixture is then fluidized by passing an air stream up through the oscillating table. The high bulk density materials are thus travelling up the titled oscillating table whereas the low bulk density table are travelling down the table. The high bulk density materials are thus separated from the low bulk density materials.

Alternatively, a rotating cylinder with indentations may be used wherein the stream mixture is forced by an air flow or gas flow to rotate up along the wall of the cylinder, wherein the bulkier material is caught and removed by indentations in the cylinder wall towards a separate product stream.

It is understood that any device suitable for separating the at least one infusible material from the dried flavored malted cereal known by the skilled in the art may be used according to general practice such as notably using optimal times, air flow, tilt angle and time.

It is further understood that other techniques for separating the at least one solid infusible material from the dried flavored malted cereals into fractions based on bulk density may also be used in the method according to the present invention.

In embodiments of the method according to the present invention, the at least one solid infusible material, as detailed above, is separated from the dried flavored malted cereals by optical separation.

Any optical separation techniques and devices for the separation of the at least one solid infusible material from the dried flavored malted cereals, known to those skilled in the art may be used.

In general, the at least one solid infusible material and the dried flavored malted cereals may be separated by feeding the mixture resulting from the malting process of cereals, as detailed above, into an optical sorter. A stream comprising said at least one solid infusible material and said dried flavored malted cereals is typically fed into an inlet of the optical sorter, which is typically at or near the top of the device. The stream is then typically thinned and fed in a controlled manner down a chute where it falls down and into the line of sight of at least one camera. The optical sorter typically comprises at least one monochromatic or bichromatic camera that can operate in the visible spectrum, infrared spectrum or near-infrared spectrum. The camera thus detects and distinguishes the at least one solid infusible material and the dried flavored malted cereals based on their color and optical properties. The at least one solid infusible material and the dried flavored malted cereals are consequently sorted, thereby affording a substantially solid infusible material-free dried flavored malted cereals, as detailed above. In preferred embodiments, the optical sorter comprises an expeller which may direct a stream of air or other gas at an identified particle of said at least one solid infusible material and, pushing it out of the stream and causing it to be removed from the stream of infusible material and malted cereals, and collected in a waste stream.

Preferably, the at least one solid infusible material is separated from the dried flavored malted cereals by optical separation, wherein the optical sorter comprises at least one monochromatic or bichromatic camera operating in the near-infrared spectrum.

In another aspect according to the present invention, there is provided the use of a separation technique for separating at least one solid infusible material from a mixture further containing dried flavored malted cereals. In embodiments according to the invention, said solid infusible material relates to a material that has been added during a malting process of said cereals.

It is further understood that all definitions and preferences, as described above, equally apply for all further embodiments, as described below.

In another aspect according to the present invention, there is provided dried flavored malted cereals obtained or obtainable by said method.

In another aspect according to the present invention, there is provided a beverage or food product, produced by using said dried flavored malted cereals obtained or obtainable by said method.

It is further understood that all definitions and preferences, as described above, equally apply for all further embodiments, as described below

Said beverage product may include fermented beverages, such as beer or whisky.

Said food product may include bakery goods, pastry, confectionary or snacks.

### EXAMPLE

### Experimental section

The invention will be described in more details, whose purpose is merely illustrative and not intended to limit the scope of protection.
Figure 1 is a schematic representation of the separation of the solid infusible material from the dried flavored malted cereals according to the method of the present invention.
Figure 2 is a spider web representation of the aroma profile of a beer produced by using the dried flavored malted cereals of example 1 manufactured according to the present invention.
Figure 3 is a spider web representation of the flavor profile of a beer produced by using the dried flavored malted cereals of example 1 manufactured according to the present invention.
Figure 4 is a spider web representation of the flavor profile of a beer produced by using the dried flavored malted cereals of comparative example 2.
Figure 5 is a spider web representation of the flavor profile of a beer produced by using the dried flavored malted cereals of example 2 manufactured according to the present invention.
Figure 6 is a spider web representation of the flavor profile of a beer produced by using the dried flavored malted cereals of comparative example 3.
Figure 7 is a spider web representation of the flavor profile of a beer produced by using the dried flavored malted cereals of example 3 manufactured according to the present invention.
Figure 8 is a spider web representation of the aroma profile of a beer produced by using the dried flavored malted cereals of comparative example 4.
Figure 9 is a spider web representation of the flavor profile of a beer produced by using the dried flavored malted cereals of example 4 manufactured according to the present invention.
Figure 10 is a spider web representation of the aroma profile of a beer produced by using the dried flavored malted cereals of comparative example 5 manufactured according to the present invention.
Figure 11 is a spider web representation of the flavor profile of a beer produced by using the dried flavored malted cereals of example 5 manufactured according to the present invention.

### Example 1: Producing a dried flavored malted barley according to the present invention

Malting at a laboratory scale was performed with two-rowed spring barley RGT Planet. The malting procedure was as follows:
- the barley was mixed with lavender and dry orange peel at a weight ratio of raw barley:lavender:dry orange peel of 10:1:1, in a steeping tank. The mixture thereby obtained was subsequently steeped by a succession of wet and dry stages for an overall period of 43 hours at an average temperature of 16 °C.
- The mixture containing steeped barley was consequently transferred to a germination tank where the steeped barley was germinated at a temperature of 17°C for a period of 96 hours.
- The mixture, now containing germinated barley was consequently transferred to a kiln. Fresh orange peels were then added into the kiln at a weight ratio raw barley:fresh orange peel of 10:1, and the resulting mixture was kilned for an overall period of 21 hours following a temperature curve of from 60°C to 85°C. The resulting mixture comprising the now dried flavored malt was then cooled down to 20°C for 1 hour.

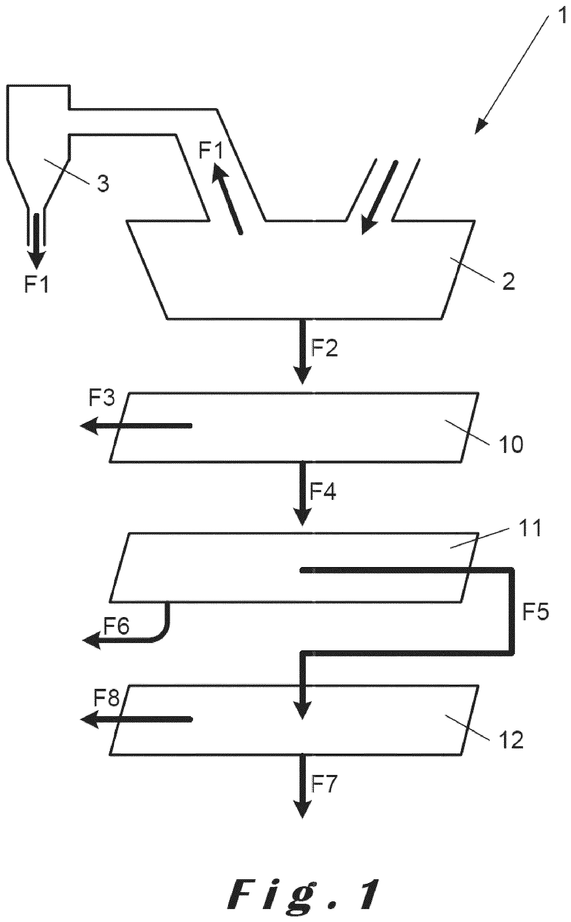

In a subsequent separation step, the mixture resulting from the malting process of barley, comprising the dried flavored malted barley, the orange peels and the lavender flower was fed into a A/S Rationel Kornservice laboratory-scale model MLN sample cleaner (Pfeuffer GmbH). Referring now to Figure 1, the lavender flowers and the orange peel were separated from the dried flavored malted barley using the experimental procedure described herein-below.

The sample cleaner **1** was mounted with three successive sieves **(10,11,12)** having, from the top sieve **10** to the bottom sieve **12,** respectively, round apertures with a mesh size of 6.50 mm (top sieve), elongated apertures with a mesh size of 2.20 mm (intermediate sieve) and elongated apertures with a mesh size of 2.65 mm (bottom sieve).

The mixture was charged into the de-awner tank **2** of the sample cleaner **1,** and the lavender flowers were removed by suction/aspiration by an aspiration means **3,** thereby forming a Fraction 1 (F1), which was subsequently discarded. The mixture, now substantially depleted from lavender flowers and forming Fraction 2 (F2), was then transferred onto the top sieve **10.**

The orange peels, typically having a cross section higher than 6.50mm, were essentially retained on the top sieve **10** forming a Fraction 3 (F3), while smaller pieces of orange peel, the remaining lavender flowers and the dried flavored malted barley passed though the top sieve **10,** forming a Fraction 4 (F4). Fraction 3 was subsequently discarded, while Fraction 4 was transferred onto the medium sieve **11.**

The dried flavored barley in Fraction 4, having typically a cross section of around 2.5 mm, was essentially retained on the intermediate sieve **11** now forming a Fraction 5 (F5), while orange peels, and lavender flower, both having a size below 2.2 mm, essentially passed though the sieve **11,** forming a Fraction 6 (F6). Fraction 5 was recovered and transferred to the bottom sieve **12,** while Fraction 6 was discarded.

Fraction 5, containing essentially the dried malted barley, was subsequently sieved through the bottom sieve **12,** with the dried malted barley passing through the bottom sieve forming Fraction 7 (F7), while the remaining material that was retained on the bottom sieve **12,** forming Fraction 8, was discarded. Fraction 7 was recovered and consists essentially of the dried flavored malted barley, or pure dried flavored malted barley.

### Comparative Example 1: Producing a dried flavored malted barley with solid infusible material

A flavored malted barley was produced in an analogous manner to Example 1, except that the step of separation of the flavored malt from the infusible substances added was not performed.

### Example 2: Producing a dried flavored malted barley according to the present invention

A flavored malted barley was produced in a substantially analogous manner to Example 1, except that the barley was mixed herein with a gingerbread cookie composition, the latter relating to a spice mixture cinnamon:dried ginger: clove: crushed whole nutmeg: allspice: black pepper having a weight ratio of 51.6:15.0:2.3:5.0:1.6:1.0. The barley was mixed with said gingerbread cookie composition at a weight ratio of raw barley:gingerbread cookie of 4:1, in a steeping tank. No extra matter of said gingerbread cookie composition or any other solid infusible material was added in the kilning step or anywhere else during the malting process.

The temperatures and residence times for the different steps were the same as those mentioned in Example 1.

In a subsequent separation step, the mixture resulting from the malting process of barley, comprising the dried flavored malted barley and the gingerbread cookie composition was separated as described in Example 1. The sample cleaner 1 was mounted with five successive sieves having, from the top sieve to the bottom sieve, respectively, round apertures with a mesh size of 7.00 mm (top sieve), elongated apertures with a mesh size of 6.50 mm, round apertures with a mesh size of 5.50 mm, round apertures with a mesh size of 2.65 mm and elongated apertures with a mesh size of 2.00 mm (bottom sieve).

Prior to sieving, the mixture was subjected to a suction/aspiration step by an aspiration means.

### Comparative Example 2: Producing a dried flavored malted barley with solid infusible material

A flavored malted barley was produced in an analogous manner to Example 2, except that the step of separation of the flavored malt from the infusible substances added was not performed.

### Example 3: Producing a dried flavored malted barley according to the present invention

A flavored malted barley was produced in a substantially analogous manner to Example 1, except that the barley was mixed herein with cacao nibs and dry orange peels at a weight ratio of raw barley: cacao nibs : dry orange peels of 10:1:1 in a steeping tank. The temperatures and residence times for the different steps were the same as those mentioned in Example 1. After a germination step, the mixture was transferred to a kiln. Fresh orange peels were added into the kiln at a weight ratio raw barley: fresh orange peel of 10:1.

In a subsequent separation step, the mixture resulting from the malting process of barley, comprising the dried flavored malted barley, the cacao nibs and the orange peels was separated as described in Example 1. The sample cleaner **1** was mounted with three successive sieves **(10,11,12)** having, from the top sieve **10** to the bottom sieve **12,** respectively, round apertures with a mesh size of 6.50 mm (top sieve), elongated apertures with a mesh size of 2.65 mm (intermediate sieve) and round apertures with a mesh size of 2.00 mm (bottom sieve).

Prior to sieving, the mixture was subjected to a suction/aspiration step by an aspiration means.

### Comparative Example 3: Producing a dried flavored malted barley with solid infusible material

A flavored malted barley was produced in an analogous manner to Example 3, except that the step of separation of the flavored malt from the infusible substances added was not performed.

### Example 4: Producing a dried flavored malted barley according to the present invention

A flavored malted barley was produced in a substantially analogous manner to Example 1, except that the barley was mixed herein with dry lemon peel and dried rosemary at a weight ratio of raw barley:dry lemon peel: dried rosemary of 10:1:1, in a steeping tank. No extra matter of lemon peel or dried rosemary, nor any other solid infusible material was added in the kilning step or anywhere else during the malting process.

The temperatures and residence times for the different steps were the same as those mentioned in Example 1.

In a subsequent separation step, the mixture resulting from the malting process of barley, comprising the dried flavored malted barley, the rosemary and the lemon peels was separated as described in Example 1. The sample cleaner **1** was mounted with three successive sieves **(10,11,12)** having, from the top sieve **10** to the bottom sieve **12,** respectively, round apertures with a mesh size of 6.50 mm (top sieve), elongated apertures with a mesh size of 2.20 mm (intermediate sieve) and elongated apertures with a mesh size of 2.65 mm (bottom sieve).

Prior to sieving, the mixture was subjected to a suction/aspiration step by an aspiration means.

### Comparative Example 4: Producing a dried flavored malted barley with solid infusible material

A flavored malted barley was produced in an analogous manner to Example 4, except that the step of separation of the flavored malt from the infusible substances added was not performed.

### Example 5: Producing a dried flavored malted barley according to the present invention

A flavored malted barley was produced in a substantially analogous manner to Example 1, except that the barley was mixed herein with dried ginger and dry orange peels at a weight ratio of raw barley: dried ginger:dry orange peels of 10:1:1 in a steeping tank. The temperatures and residence times for the different steps were the same as those mentioned in Example 1. After a germination step, the mixture was transferred to a kiln. Fresh orange peels were added into the kiln at a weight ratio raw barley: fresh orange peel of 10:1.

In a subsequent separation step, the mixture resulting from the malting process of barley, comprising the dried flavored malted barley, the dried ginger and the orange peels was separated as described in Example 1. The sample cleaner **1** was mounted with three successive sieves **(10,11,12)** having, from the top sieve **10** to the bottom sieve **12,** respectively, round apertures with a mesh size of 6.50 mm (top sieve), round apertures with a mesh size of 3.00 mm (intermediate sieve), and elongated apertures with a mesh size of 2.65 mm and (bottom sieve).

Prior to sieving, the mixture was subjected to a suction/aspiration step by an aspiration means.

### Comparative Example 5: Producing a dried flavored malted barley with solid infusible material

A flavored malted barley was produced in an analogous manner to Example 5, except that the step of separation of the flavored malt from the infusible substances added was not performed.

### Brewing procedure of the malted barley obtained from Examples 1-5 and Comparative Examples 1-5

The malted flavored barley obtained from Examples 1-5 as well as from Comparative Examples 1-5 were individually and separately brewed into beers according to the following process.

The brewing of the malted flavored barley obtained from Examples 1-5 and from Comparatives Example 1-5 (respectively 4.8 kg and 4.8 kg) was carried out on a 20 L scale and 20 L of water for the mashing.

The brewing incorporated a mashing process with the following temperature regime: 69 °C for 60 min, heating up to 72°C, at 72 °C for 20 min, heating up to 78°C, at 78 °C for 4 min, followed by mash filtration.

For sparging, hot water was used. Boiling was for 60 minutes and hop was added in the form of hop pellets.

### Evaluation of the properties of the flavored malts according to examples 1-5 and comparative examples 1-5

The turbidity of the obtained wort obtained during the brewing process of the malted flavored barley obtained from Examples 1-5 and comparative examples 1-5 was measured by a turbidity meter (HACH, Model TL2300). It will be appreciated that e.g. a high value for the turbidity of the obtained wort will persist along the brewing process, resulting in a relatively high value for the final beer product, which will affect the shelf life of the product.

Results of the turbidity of wort obtained during the brewing process of the malted flavored barley obtained from Examples 1-5 and comparative examples 1-5 is summarized in Table 1 herein-below.

**Table 1**

| | **Turbidity** |
|---|---|
| Example 1 | 2.4 |
| Comparative example 1 | 4.2 |
| Example 2 | 10.2 |
| Comparative example 2 | 20.5 |
| Example 3 | 3.1 |
| Comparative example 3 | 7.2 |
| Example 4 | 2.0 |
| Comparative example 4 | 6.4 |
| Example 5 | 3.1 |
| Comparative example 5 | 7.6 |

### Sensory panel

The beers brewed from the dried flavored malted barley of examples 1-5 according to the invention and comparative examples 1-5 were subjected to a sensory panel constituted of 6 participants, the female:male ratio being 1:2.

The beers were blind-coded and the order of the test presentation was randomized. The persons that were part of said independent panel had no part in the making of or the research leading to the invention, nor were they linked in any way to the invention. With reference to the terms "blind" or "blind-coded" conditions, it is understood that none of the members of the test panel had any information whatsoever regarding the nature and identity of the test sample. Each member of the test panel conducted the test in absence of any other members. Both beers were evaluated on the basis of a selection of organoleptic parameters, wherein each member of the test panel was asked for an appreciation by evaluating said parameters. Said evaluation was obtained by rating said parameters on a scale of 0-5, in increments of 1. It is thereby understood that a higher value represents a more positive (favorable) appreciation of the examined property. In other words, if a member of the test panel gives a score of 5 to a particular beer for the parameter "spicy", then this means that the member considers the beer to be highly spicy, not that he or she appreciates its spiciness. Said ratings were subsequently averaged. It is thereby to be understood that a difference of 1 increment and more indicates a considerable change for said parameter.

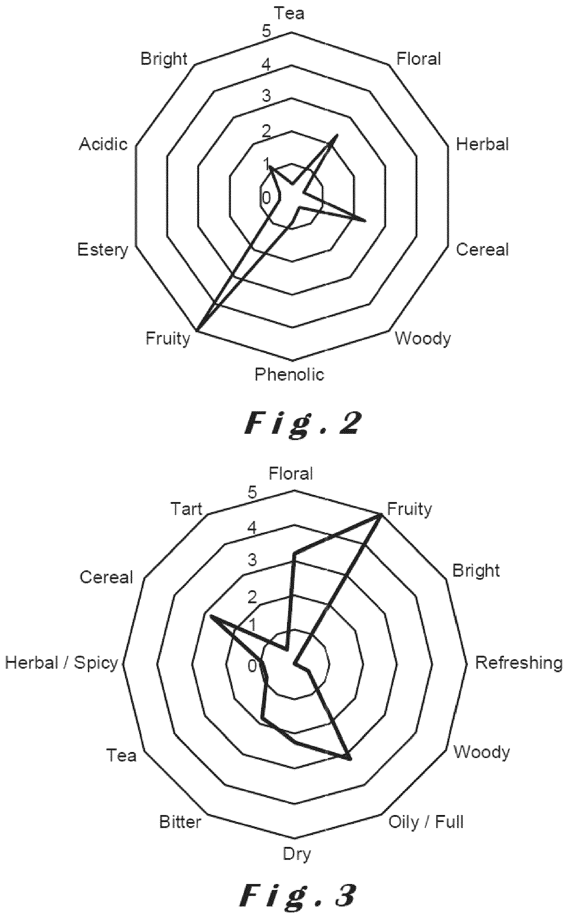

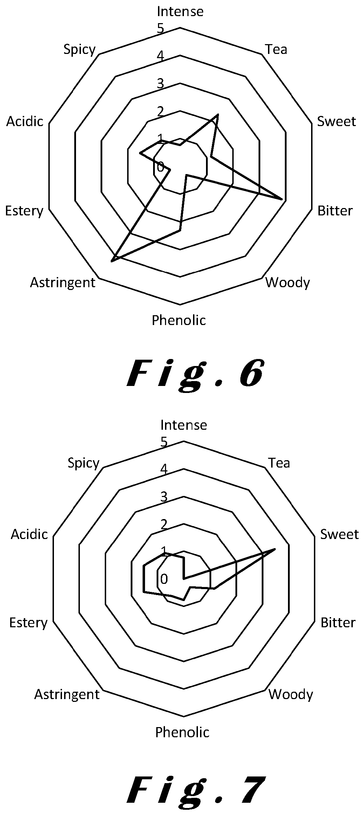

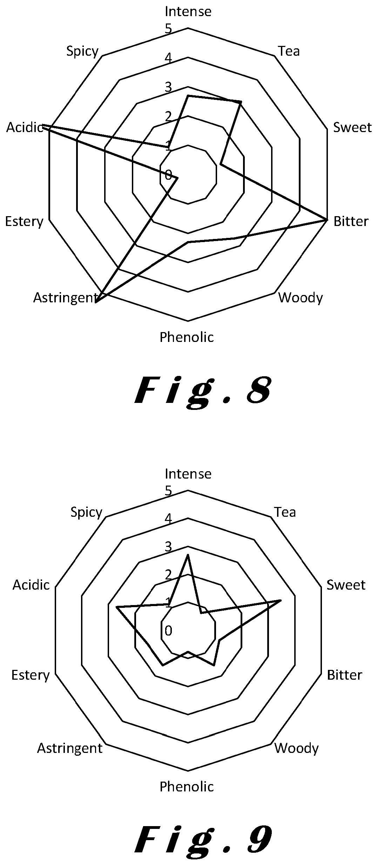

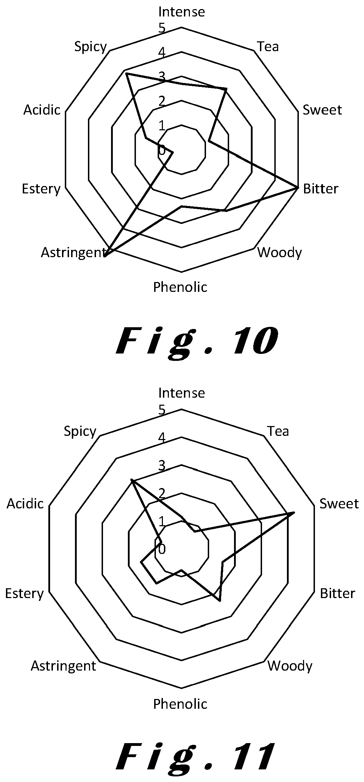

The results of the sensory panel are summarized in Figure 2 to 11 herein-below.

The results from the sensory panels show that the aroma profile (Figure 2) and the flavor profile (Figure 3) of the beer brewed from the dried flavored malted barley of example 1 is characteristic for a fruity and floral beer, despite the removal of the solid infusible materials at the end of the malting process.

The removal of said solid infusible material at the end of the malting process does not impair the fruity and/or floral taste of the resulting beer.

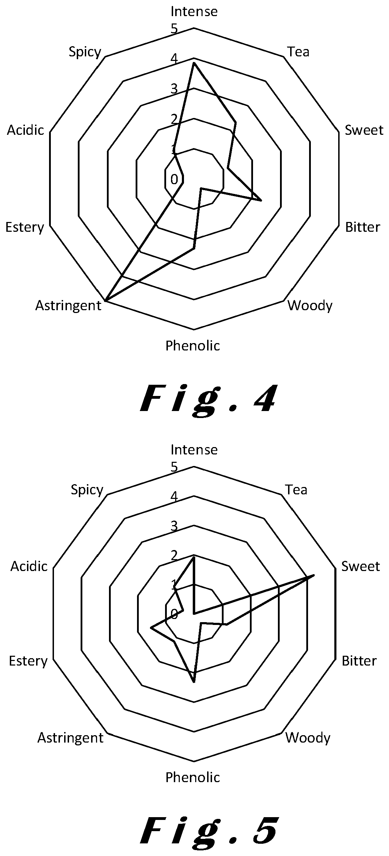

The results shown in Figures 4-11 further illustrate that the removal of the solid infusible materials at the end of the malting process can provide for dried flavored malted cereals having modified organoleptic properties in comparison with properties obtained from a malted cereal containing the at least one solid infusible material. As a consequence, a broader organoleptic spectrum or organoleptic range is at disposition of the user.

## Claims

1. A method for producing dried flavored malted cereals, comprising the following steps:
a. providing cereals;
b. adding at least one solid infusible material, wherein said at least one solid infusible material is selected from the group consisting of aromatic herbs, spices, flowers, fruits and seeds, and combinations thereof, for flavoring said cereals during a malting process of said cereals, wherein said malting process of cereals comprises
i. at least one steeping step,
ii. at least one germination step, and
iii. at least one drying step;
c. obtaining dried flavored malted cereals;
d. separating said at least one solid infusible material from the dried flavored malted cereals by means of at least one separation technique, selected from the following: gravity separation, optical separation, and separation by size.

2. The method for producing dried flavored malted cereals according to claim 1, wherein said cereals are selected from the group consisting of barley, wheat, rye, corn, millet, oats, rice, sorghum, , , , , and combinations thereof.

3. The method for producing dried flavored malted cereals according to any one of claim 1 or claim 2, wherein said at least one infusible material is added in a weight ratio solid infusible material:cereals of at least 0.01:1 and at most 1:1.

4. The method for producing dried flavored malted cereals according to any one of claims 1 to 3, wherein said at least one solid infusible material is added before or during said at least one steeping step, and/or before or during the germination step, and/or before or during the drying step.

5. The method for producing dried flavored malted cereals according to any one of claims 1 to 4, wherein said at least one solid infusible material is added before said at least one steeping step and before said at least one drying step.

6. The method for producing dried flavored malted cereals according to any one of claims 1 to 5, wherein at least one extract of said at least one solid infusible material and/or at least one liquid sweetener is added during said malting process.

7. The method for producing dried flavored malted cereals according to any one of claims 1 to 6, wherein, prior to said at least one steeping process, said malting process comprises a step of pre-treating the provided cereals, said pretreating including at least one of cleaning, de-awning, washing, sorting by size or by quality of the cereal particles.

8. The method for producing dried flavored malted cereals according to any one of claims 1 to 7, wherein separating said at least one solid infusible material from the dried flavored malted cereals is performed by use of a separator device having a set of sieves.

9. The method for producing dried flavored malted cereals according to claim 8, wherein the sieve openings of a sieve of said set of sieves, having the smallest sieve openings, have a maximal length of at least 500.0 µm, and the sieve openings of a sieve of said set of sieves, having the largest sieve openings, have a maximal length of at most 10.0 mm.

10. The method for producing dried flavored malted cereals according to any one of claims 1 to 9, wherein, after step d) of separating said at least one solid infusible material, said dried flavored malted cereals contain less than 10.0 wt.% of any other component.

11. Use of a separation technique for separating at least one solid infusible material from a mixture further containing dried flavored malted cereals according to any one of claims 1-10, wherein said solid infusible material relates to a material that has been added during a malting process of said cereals.

12. The use according to claim 11, wherein said separation technique is selected from the following: gravity separation, optical separation, separation by size, and combinations thereof.

13. Dried flavored malted cereals obtained by the method according to any one of claims 1-10.

14. Use of the dried flavored malted cereals according to claim 13, for the production of a beverage product or a food product.

## Patentansprüche

1. Ein Verfahren zur Herstellung von getrocknetem aromatisiertem gemälztem Getreide, wobei dieses Verfahren die folgenden Schritte umfasst:
a. Bereitstellen von Getreide;
b. Hinzufügen von mindestens einem festen unschmelzbaren Material, wobei dieses mindestens eine feste unschmelzbare Material ausgewählt ist aus der Gruppe bestehend aus aromatischen Kräutern, Gewürzen, Blumen, Früchten und Samen, und Kombinationen davon, um das Getreide während eines Mälzverfahrens des Getreides zu aromatisieren, wobei das Mälzverfahren von Getreide folgende Schritte umfasst:
i. mindestens einen Einweichschritt,
ii. mindestens einen Keimschritt, und
iii. mindestens einen Trockenschritt;
c. Erlangung von getrocknetem aromatisiertem gemälztem Getreide;
d. Trennen des mindestens einen festen unschmelzbaren Materials vom getrockneten aromatisierten gemälzten Getreide mittels mindestens einer Trenntechnik, ausgewählt aus den Folgenden: Schwerkrafttrennung, optische Trennung, und Trennung nach Größe.

2. Das Verfahren zur Herstellung von getrocknetem aromatisiertem gemälztem Getreide nach Anspruch 1, wobei das Getreide ausgewählt ist aus der Gruppe bestehend aus Gerste, Weizen, Roggen, Mais, Hirse, Hafer, Reis, Sorghum, und Kombinationen davon.

3. Das Verfahren zur Herstellung von getrocknetem aromatisiertem gemälztem Getreide nach irgendeinem der Ansprüche 1 oder 2, wobei das mindestens eine unschmelzbare Material in einem Gewichtsverhältnis festes unschmelzbares Material zu Getreide von mindestens 0,01:1 und höchstens 1:1 hinzugefügt wird.

4. Das Verfahren zur Herstellung von getrocknetem aromatisiertem gemälztem Getreide nach irgendeinem der Ansprüche 1 bis 3, wobei das mindestens eine feste unschmelzbare Material vor oder während des mindestens einen Einweichschrittes, und/oder vor oder während des Keimschrittes, und/oder vor oder während des Trockenschrittes hinzugefügt wird.

5. Das Verfahren zur Herstellung von getrocknetem aromatisiertem gemälztem Getreide nach irgendeinem der Ansprüche 1 bis 4, wobei das mindestens eine feste unschmelzbare Material vor dem mindestens einen Einweichschritt und vor dem mindestens einen Trockenschritt hinzugefügt wird.

6. Das Verfahren zur Herstellung von getrocknetem aromatisiertem gemälztem Getreide nach irgendeinem der Ansprüche 1 bis 5, wobei mindestens ein Extrakt des mindestens einen festen unschmelzbaren Materials und/oder mindestens ein flüssiges Süßungsmittel während des Mälzverfahrens hinzugefügt wird.

7. Das Verfahren zur Herstellung von getrocknetem aromatisiertem gemälztem Getreide nach irgendeinem der Ansprüche 1 bis 6, wobei, vor dem mindestens einen Einweichverfahren, das Mälzverfahren einen Schritt der Vorbehandlung des bereitgestellten Getreides umfasst, wobei diese Vorbehandlung mindestens einen Schritt von Reinigen, Entgrannen, Waschen, Sortieren nach Größe oder nach Qualität der Getreidepartikel umfasst.

8. Das Verfahren zur Herstellung von getrocknetem aromatisiertem gemälztem Getreide nach irgendeinem der Ansprüche 1 bis 7, wobei das Trennen des mindestens einen festen unschmelzbaren Materials vom getrockneten aromatisierten gemälzten Getreide durch Verwendung einer Trennvorrichtung mit einem Satz von Sieben durchgeführt wird.

9. Das Verfahren zur Herstellung von getrocknetem aromatisiertem gemälztem Getreide nach Anspruch 8, wobei die Sieböffnungen eines Siebes des Satzes von Sieben, welches die kleinsten Sieböffnungen hat, eine maximale Länge von mindestens 500,0 µm aufweisen, und die Sieböffnungen eines Siebes des Satzes von Sieben, welches die größten Sieböffnungen hat, eine maximale Länge von höchstens 10,0 mm aufweisen.

10. Das Verfahren zur Herstellung von getrocknetem aromatisiertem gemälztem Getreide nach irgendeinem der Ansprüche 1 bis 9, wobei, nach Schritt d) des Trennens des mindestens einen festen unschmelzbaren Materials, das getrocknete aromatisierte gemälzte Getreide weniger als 10,0 Gew.-% irgendeiner anderen Komponente enthält.

11. Verwendung einer Trenntechnik zum Trennen von mindestens einem festen unschmelzbaren Material von einer Mischung, welche ferner getrocknetes aromatisiertes gemälztes Getreide nach irgendeinem der Ansprüche 1 bis 10 enthält, wobei sich das feste unschmelzbare Material auf ein Material bezieht, das während eines Mälzverfahrens des Getreides hinzugefügt wurde.

12. Die Verwendung nach Anspruch 11, wobei die Trenntechnik ausgewählt ist aus Folgenden: Schwerkrafttrennung, optische Trennung, Trennung nach Größe, und Kombinationen davon.

13. Getrocknetes aromatisiertes gemälztes Getreide erhalten nach dem Verfahren nach irgendeinem der Ansprüche 1 bis 10.

14. Verwendung des getrockneten aromatisierten gemälzten Getreides nach Anspruch 13 zur Herstellung eines Getränkeprodukts oder eines Lebensmittelprodukts.

## Revendications

1. Procédé de fabrication de céréales maltées aromatisées séchées, comprenant les étapes suivantes consistant à :
a. fournir des céréales ;
b. ajouter au moins un matériau infusible solide, dans lequel ledit au moins un matériau infusible solide est choisie parmi le groupe constitué d'herbes aromatiques, d'épices, de fleurs, de fruits et de graines, et leurs combinaisons, pour aromatiser lesdites céréales pendant un processus de maltage desdites céréales, dans lequel ledit processus de maltage des céréales comprend
i. au moins une étape de trempage,
ii. au moins une étape de germination, et
iii. au moins une étape de séchage ;
c. obtenir des céréales maltées aromatisées séchées ;
d. séparer ledit au moins un matériau infusible solide des céréales maltées aromatisées séchées au moyen d'au moins une technique de séparation, choisie parmi les suivantes : séparation par gravité, séparation optique et séparation par taille.

2. Procédé de production de céréales maltées aromatisées séchées selon la revendication 1, dans lequel lesdites céréales sont choisies dans le groupe constitué de l'orge, le blé, le seigle, le maïs, le millet, l'avoine, le riz, le sorgho, et leurs combinaisons.

3. Procédé de production de céréales maltées aromatisées séchées selon l'une quelconque des revendications 1 ou 2, dans lequel ledit au moins un matériau infusible est ajouté dans un rapport pondéral matériau infusible solide : céréales d'au moins 0,01:1 et d'au plus 1:1.

4. Procédé de production de céréales maltées aromatisées séchées selon l'une quelconque des revendications 1 à 3, dans lequel ledit au moins un matériau infusible solide est ajouté avant ou pendant ladite au moins une étape de trempage, et/ou avant ou pendant l'étape de germination, et/ou avant ou pendant l'étape de séchage.

5. Procédé de production de céréales maltées aromatisées séchées selon l'une quelconque des revendications 1 à 4, dans lequel ledit au moins un matériau infusible solide est ajouté avant ladite au moins une étape de trempage et avant ladite au moins une étape de séchage.

6. Procédé de production de céréales maltées aromatisées séchées selon l'une quelconque des revendications 1 à 5, dans lequel au moins un extrait dudit au moins un matériau infusible solide et/ou au moins un édulcorant liquide est ajouté pendant ledit processus de maltage.

7. Procédé de production de céréales maltées aromatisées séchées selon l'une quelconque des revendications 1 à 6, dans lequel, avant ledit au moins un processus de trempage, ledit processus de maltage comprend une étape de prétraitement des céréales fournies, ledit prétraitement comprenant au moins l'une des opérations suivantes : nettoyage, d'ébarbage, lavage, tri par taille ou par qualité des particules de céréales.

8. Procédé de production de céréales maltées aromatisées séchées selon l'une quelconque des revendications 1 à 7, dans lequel la séparation dudit au moins un matériau infusible solide des céréales maltées aromatisées séchées est effectuée à l'aide d'un dispositif de séparation ayant un ensemble de tamis.

9. Procédé de production de céréales maltées aromatisées séchées selon la revendication 8, dans lequel les ouvertures de tamis d'un tamis dudit ensemble de tamis, ayant les ouvertures de tamis les plus petites, ont une longueur maximale d'au moins 500,0 µm, et les ouvertures de tamis d'un tamis dudit ensemble de tamis, ayant les ouvertures de tamis les plus grandes, ont une longueur maximale d'au plus 10,0 mm.

10. Procédé de production de céréales maltées aromatisées séchées selon l'une quelconque des revendications 1 à 9, dans lequel, après l'étape d) de séparation dudit au moins un matériau infusible solide, lesdites céréales maltées aromatisées séchées contiennent moins de 10,0 % en poids de tout autre composant.

11. Utilisation d'une technique de séparation pour séparer au moins un matériau infusible solide d'un mélange contenant en outre des céréales maltées aromatisées séchées selon l'une quelconque des revendications 1 à 10, dans laquelle ledit matériau infusible solide se rapporte à un matériau qui a été ajouté pendant un processus de maltage desdites céréales.

12. Utilisation selon la revendication 11, dans laquelle ladite technique de séparation est choisie parmi les suivantes : séparation par gravité, séparation optique, séparation par taille et leurs combinaisons.

13. Céréales maltées aromatisées séchées obtenues par le procédé selon l'une quelconque des revendications 1 à 10.

14. Utilisation des céréales maltées aromatisées séchées selon la revendication 13, pour la production d'une boisson ou d'un produit alimentaire.
